# EUROPEAN PATENT APPLICATION

(11) **EP 4 693 193 A1**
(43) Date of publication of application: **11.02.2026**
(21) Application number: 24780053.5
(22) Date of filing: 22.03.2024
(51) Int. Cl.: G06T 7/70

(54) **DATA MANAGEMENT DEVICE, DATA MANAGEMENT SYSTEM, DATA MANAGEMENT METHOD, AND DATA MANAGEMENT PROGRAM**

(30) Priority: 27.03.2023 JP 2023050213
(71) Applicant: Topcon Corporation, Tokyo 174-8580 (JP)
(72) Inventor: SASAKI, Takeshi, Tokyo 174-8580 (JP); FUKAYA, Nobuyuki, Tokyo 174-8580 (JP); SHIGETA, Masahiro, Tokyo 174-8580 (JP)
(74) Representative: Schmitt-Nilson Schraud Waibel Wohlfrom Patentanwälte Partnerschaft mbB
(86) International application number: PCT/JP2024/011452
(87) International publication number: WO 2024/203935

(57) **Abstract**

A data management apparatus 2 comprises: a storage unit 35 that stores an existing image including a feature point; an imaging unit 30 that captures a new image; a feature extraction unit 40 that extracts a feature point from the new image; a feature matching unit 41 that acquires an existing image corresponding to the new image, and extracts and associates a feature point in the new image corresponding to a feature point in the acquired existing image; an imaging situation calculation unit 42 that calculates an imaging situation of the new image from the associated feature point in the new image; a difference identification unit 43 that extracts a differential feature point that fails to be associated with a feature point in the existing image among feature points in the new image, and attaches relative position information with respect to the associated feature point to the differential feature point based on the imaging situation of the new image; and a DB update unit 44 that stores the new image in which the relative position information is attached to the differential feature point in the storage unit 35 as an existing image.

## Description

### [Technical Field]

The present disclosure relates to a data management apparatus, a data management system, a data management method, and a data management program.

### [Background Art]

There have conventionally been developed techniques for supporting work while tracking the position of a worker in real time. Such techniques include Patent Literature 1, which discloses a construction management system including a server computer that calculates information to be used in a work apparatus (a work machine). The server computer includes: a position information acquisition unit that acquires position information of a work apparatus operating at a construction site that is output from the work apparatus; a current topographic data acquisition unit that acquires current topographic data of the construction site; and a designed topographic data acquisition unit that acquires designed topographic data of the construction site. The work apparatus in Patent Literature 1 acquires its own position information using a GPS receiver during work.

### [Citation List]

### [Patent Literature]

[Patent Literature 1] Japanese Patent No. 6782270

### [Summary of Invention]

### [Technical Problem]

A system used at a work site is required to make it easier to check the work site and grasp the state of the topography. However, the technique of Patent Literature 1 requires the work apparatus to include a GPS receiver to determine its own position. Further, as another way for the work apparatus to determine its own position, causing the work apparatus to observe a reference point with known coordinates requires work for setting up the reference point.

An object of the present disclosure is to provide a data management apparatus, a data management system, a data management method, and a data management program that make it possible to check a work site and grasp the state of the topography more easily.

### [Solution to Problem]

To achieve the above object, a data management apparatus according to the present disclosure comprises: a storage unit that stores an existing image including a feature point; an imaging unit that captures a new image; a feature extraction unit that extracts a feature point from the new image; a feature matching unit that acquires an existing image corresponding to the new image from the storage unit, and extracts and associates a feature point in the new image corresponding to a feature point in the acquired existing image; an imaging situation calculation unit that calculates an imaging situation of the new image from the associated feature point in the new image; a difference identification unit that extracts a differential feature point that fails to be associated with a feature point in the existing image among feature points in the new image, and attaches relative position information with respect to the associated feature point to the differential feature point based on the imaging situation of the new image; and an update unit that stores the new image in which the relative position information is attached to the differential feature point in the storage unit as an existing image.

To achieve the above object, a data management system according to the present disclosure comprises: a storage unit that stores an existing image including a feature point; an imaging unit that captures a new image; a feature extraction unit that extracts a feature point from the new image; a feature matching unit that acquires an existing image corresponding to the new image from the storage unit, and extracts and associates a feature point in the new image corresponding to a feature point in the acquired existing image; an imaging situation calculation unit that calculates an imaging situation of the new image from the associated feature point in the new image; a difference identification unit that extracts a differential feature point that fails to be associated with a feature point in the existing image among feature points in the new image, and attaches relative position information with respect to the associated feature point to the differential feature point based on the imaging situation of the new image; and an update unit that stores the new image in which the relative position information is attached to the differential feature point in the storage unit as an existing image.

To achieve the above object, a data management method according to the present disclosure comprises: a storage step of a storage unit storing an existing image including a feature point; an imaging step of an imaging unit capturing a new image; a feature extraction step of a feature extraction unit extracting a feature point from the new image; a feature matching step of a feature matching unit acquiring an existing image corresponding to the new image from the storage unit, and extracting and associating a feature point in the new image corresponding to a feature point in the acquired existing image; an imaging situation calculation step of an imaging situation calculation unit calculating an imaging situation of the new image from the associated feature point in the new image; a difference identification step of a difference identification unit extracting a differential feature point that fails to be associated with a feature point in the existing image among feature points in the new image, and attaching relative position information with respect to the associated feature point to the differential feature point based on the imaging situation of the new image; and an update step of an update unit storing the new image in which the relative position information is attached to the differential feature point in the storage unit as an existing image.

To achieve the above object, a data management program according to the present disclosure is a program for causing a computer to execute: a storage step of a storage unit storing an existing image including a feature point; an imaging step of an imaging unit capturing a new image; a feature extraction step of a feature extraction unit extracting a feature point from the new image; a feature matching step of a feature matching unit acquiring an existing image corresponding to the new image from the storage unit, and extracting and associating a feature point in the new image corresponding to a feature point in the acquired existing image; an imaging situation calculation step of an imaging situation calculation unit calculating an imaging situation of the new image from the associated feature point in the new image; a difference identification step of a difference identification unit extracting a differential feature point that fails to be associated with a feature point in the existing image among feature points in the new image, and attaching relative position information with respect to the associated feature point to the differential feature point based on the imaging situation of the new image; and an update step of an update unit storing the new image in which the relative position information is attached to the differential feature point in the storage unit as an existing image.

### [Advantageous Effects of Invention]

A data management apparatus, a data management system, a data management method, and a data management program according to the present disclosure using the above means make it possible to check a work site and grasp the state of the topography more easily.

### [Brief Description of Drawings]

[Figure 1] Figure 1 is an overall configuration diagram of a data management system according to an embodiment.
[Figure 2] Figure 2 is a configuration diagram of a data management apparatus.
[Figure 3] Figure 3 is a flowchart of processes of a data management method.
[Figure 4] Figure 4 is an overall configuration diagram of a data management system according to a modification.

### [Description of Embodiments]

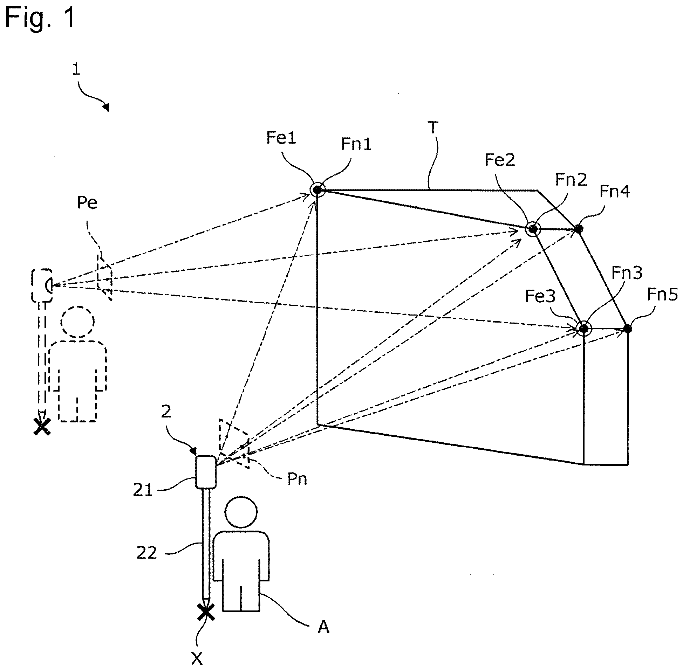

The following will describe an embodiment of the present disclosure based on the drawings. Figure 1 is an overall configuration diagram of a data management system 1 according to an embodiment of the present disclosure. Note that the description of the present embodiment schematically shows apparatuses and their positional relationship, which may differ from the actual scale for convenience of description.

As shown in Figure 1, the data management system 1 is a system in which an operator A moves while holding a data management apparatus 2 and places the data management apparatus 2 at any measuring point and the system updates a database of feature points based on images. The data management apparatus 2 includes a body part 21 and a rod-shaped pin pole 22 that supports the body part 21.

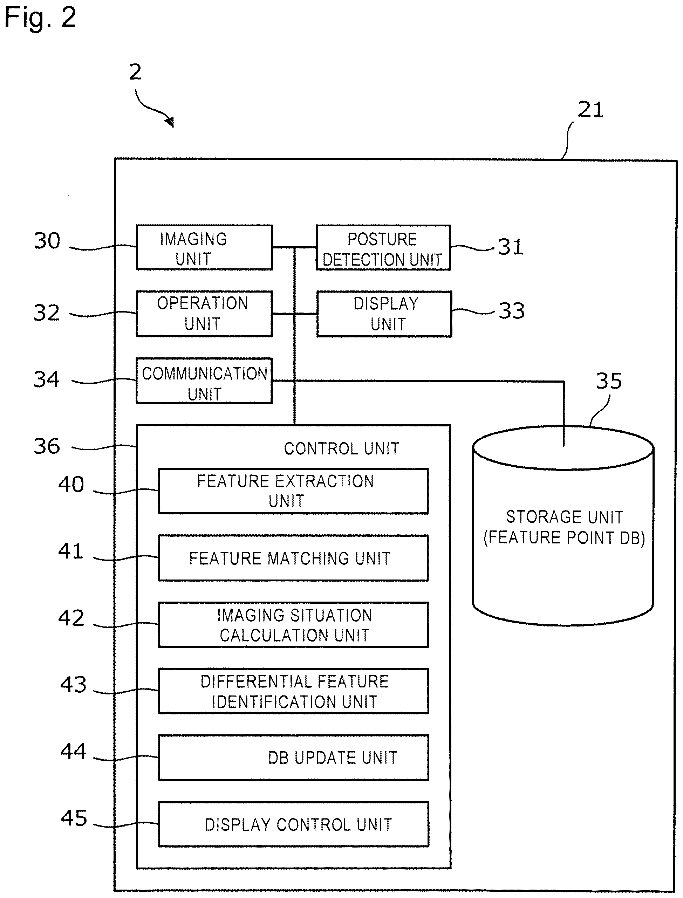

As shown in Figure 2, the body part 21 includes an imaging unit 30, a posture detection unit 31, an operation unit 32, a display unit 33, a communication unit 34, a storage unit 35, and a control unit 36. Note that although not shown, the body part 21 includes a time information acquisition unit such as a clock. Further, the body part 21 may include a position information acquisition unit such as GSNN depending on the model.

The imaging unit 30 is an image sensor (e.g., a CCD sensor or a CMOS sensor) that captures images. Images that can be captured by the imaging unit 30 may be still images or moving images. Although the present embodiment will provide description taking still images as an example for ease of understanding the invention, the present embodiment is also applicable to moving images.

The posture detection unit 31, which is a gyro sensor or other sensors, can acquire posture information of the data management apparatus 2. That is, the posture detection unit 31 can detect the imaging direction at the time of imaging by the imaging unit 30.

The operation unit 32 is operation means allowing input of various operation instructions and settings. The operation instructions can include switching on or off the power supply, instructing the imaging unit 30 to perform shooting, configuring settings related to imaging, and other instructions. The operation unit 32 may include other operation devices or input devices such as switches, buttons, and dials.

The display unit 33 is a liquid crystal display, an organic EL display, or other displays. When the display unit 33 is a touch panel display, it is possible to form the display unit 33 and the operation unit 32 integrally.

The communication unit 34 has a function to communicate with an external apparatus so that they can share information. For example, it is wireless communication means or other means. The communication unit 34 may function as wired communication means via a connection terminal. Examples of the external apparatus include a portable personal digital assistant (PDA), a smartphone, a tablet terminal, a personal computer, and other apparatuses.

The storage unit 35 is a storage device storing various information, such as a hard disk and an SSD. The storage unit 35 stores images including feature points. Hereinafter, an image including feature points stored in the storage unit 35 will be referred to as an existing image.

A feature point is a characteristic part (position) captured in an image. A value obtained by quantifying the uniqueness of the feature point in an expression such as a vector is referred to as a feature amount. The storage unit 35 stores existing images, their feature points (including feature amounts), and various types of information (data) associated with them, which constitute a so-called feature point database (hereinafter also referred to as a DB).

For example, a feature point includes position information. Position information (three-dimensional coordinate data) in a global coordinate system is linked to the feature point, corresponding to the position in the existing image. The position information of this feature point may be position information obtained as a result of making a survey in advance using a surveying machine (e.g., a total station or a scanner) or other machines, or may be position information calculated by the control unit 36 as described later. Further, the type (e.g., a total station, a scanner, or photogrammetry) of the survey in which the position information is calculated, the coordinates where the surveying apparatus is placed, and data of the time when the surveying apparatus is used are attached to the position information of the feature point.

Further, other information on imaging is also linked to the feature point. Examples of information on imaging include imaging situation information including specifications of the imaging unit (e.g., the resolution and the angle of view), imaging position information, imaging time-of-day information, imaging posture information, and imaging time information. The control unit 36 calculates the imaging position information as described later. The posture detection unit 31 detects the posture information at the time of imaging, and calculates the imaging direction from the posture information. The imaging time information is, for example, the date and time of imaging according to a clock included in the data management apparatus 2 or other time information.

Note that extracting the same feature point from different points in space or from different points in time results in attaching a plurality of pieces of information to one feature point.

The control unit 36 executes functions and/or methods implemented by codes or instructions included in programs stored in the storage unit 35. The control unit 36, which includes, as an example, a central processing unit (CPU), an MPU, a GPU, a microprocessor, a processor core, a multiprocessor, an ASIC, an FPGA, and other processors, may implement processes disclosed in each embodiment using logic circuits or dedicated circuits formed in integrated circuits or other circuits. Further, it is also possible to implement these circuits with one or more integrated circuits, and to implement a plurality of processes shown in each embodiment with one integrated circuit.

The control unit 36 in the present embodiment performs feature point management control for attaching positional coordinates to each feature point in a captured image. To describe the function of the control unit 36 for this purpose as components, the control unit 36 includes a feature extraction unit 40, a feature matching unit 41, an imaging situation calculation unit 42, a differential feature identification unit 43, a DB update unit 44, and a display control unit 45.

The feature extraction unit 40 has a function to extract feature points from an image. Specifically, it extracts feature points from a new image captured by the imaging unit 30 using a predetermined algorithm for extracting feature points. Note that a new image refers to an image before calculation of feature points. It suffices to use a known algorithm used in photogrammetry or other surveys as the predetermined algorithm. Further, the feature extraction unit 40 attaches imaging situation information such as imaging time information to the extracted feature points.

The feature matching unit 41 has a matching function to acquire an existing image corresponding to the new image from the storage unit 35, extract feature points in the new image at positions corresponding to the feature points in the acquired existing image, and attach position information to the extracted feature points.

Specifically, the feature matching unit 41 acquires an existing image in an imaging situation close to the imaging situation of the new image as an existing image corresponding to the new image. As an example of this, the feature matching unit 41 has a search function to search the storage unit 35 for an existing image similar to the new image, and acquires an existing image at an imaging position close to the imaging position of the new image. As for the imaging position of the new image, for example, when the imaging unit 30 is continuously performing shooting, the feature extraction unit 40 may set the imaging position of the existing image captured immediately before (e.g., an existing image captured at a close time of day) as an approximate imaging position of the new image. Alternatively, when the data management apparatus 2 includes a position information acquisition unit, the feature extraction unit 40 may set position information acquired by the position information acquisition unit as an approximate imaging position of the new image. Note that even if the imaging situations are not necessarily close to each other, matching is possible as long as at least the same object is captured in the images, and thus, when it is impossible to acquire an existing image at an imaging position close to the imaging position of the new image, it is also possible to search the storage unit 35 for an existing image with content similar to that captured in the new image and acquire the existing image using an image analysis technique or other techniques, as a search function of the feature matching unit 41.

The feature matching unit 41 performs matching by extracting, from the existing image acquired as described above and the new image, feature points with feature amounts coincident with or close to each other between the two images and associating them with each other. This results in the identification of the relative positional relationship between the existing image and the new image. The position information (relative position information or three-dimensional coordinates in the global coordinate system) of the feature points in the existing image is attached to the feature points associated in the new image. This position information of the feature points in the existing image may be information indicating the relative positional relationship to other feature points in the existing image or other existing images, or may be three-dimensional coordinates in the global coordinate system.

The imaging situation calculation unit 42 has a function to calculate an imaging situation of the new image from the associated feature points in the new image. If at least three or more feature points in the new image are associated with feature points in the existing image, it is possible to calculate an imaging situation such as the imaging posture from the relative positional relationship to the existing image and specification information of the imaging unit 30 using a known algorithm. That is, the imaging situation calculation unit 42 calculates the imaging situation by back calculation from the feature points associated in the new image.

The differential feature identification unit 43 has a function to extract differential feature points that fail to be associated with the feature points in the existing image among the feature points in the new image, and attach relative position information with respect to the associated feature points to the differential feature points based on the imaging situation of the new image. That is, the differential feature identification unit 43 extracts feature points (differential feature points) that fail to be matched with the feature points in the existing image. Then, since these feature points are new feature points and have no position information, the differential feature identification unit 43 newly attaches relative position information indicating relative positions with respect to the matched feature points. In this way, when relative position information is attached to new feature points, matching with at least one other image also makes it possible to calculate the three-dimensional coordinates in the global coordinate system.

The DB update unit 44 has a function to store the new image in which position information is attached to each feature point in the storage unit 35 as an existing image. That is, the DB update unit 44 updates the feature point DB by adding information on the feature points in the new image. Since each feature point in the new image also includes imaging time information, the feature point DB manages the feature points in time series.

The display control unit 45 has a function to produce a three-dimensional image based on existing images stored in the storage unit 35 and display the produced three-dimensional image on the display unit 33. For example, the display control unit 45 updates the three-dimensional image in response to continuously capturing a new image by producing a three-dimensional image each time the DB update unit 44 updates the feature point DB. Further, the display control unit 45 can use the imaging time information attached to the feature points to produce a three-dimensional image based on feature points at a predetermined point of time in the past or to show three-dimensional images at a plurality of points of time in a comparable manner. That is, the display control unit 45 can produce a three-dimensional image according to the time series.

The above configuration allows the data management apparatus 2 to update the feature point DB by continuously capturing a new image.

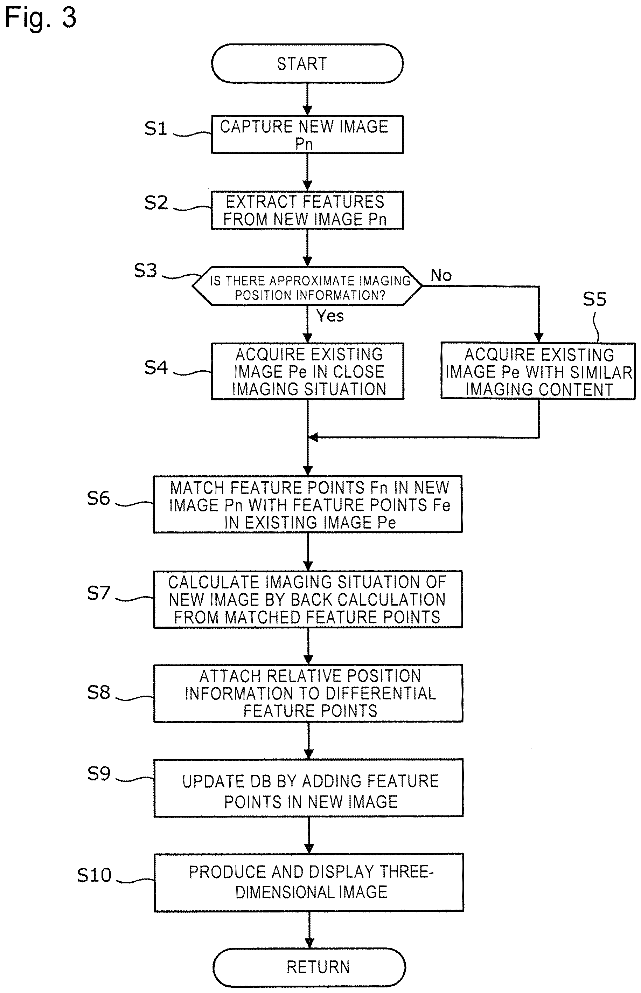

Next, Figure 3 shows a flowchart illustrating a procedure of data management control executed by the control unit 36. The following describes a data management method in the present embodiment based on this flowchart while also referring to Figure 1.

First, as step S1, the feature extraction unit 40 of the control unit 36 causes the imaging unit 30 to capture a new image Pn. For this, as shown in Figure 1, the operator A places the data management apparatus 2 at any measuring point X, and the data management apparatus 2 captures an image according to the operation via the operation unit 32. Strictly speaking, the mounting position of the imaging unit 30 on the pin pole 22 or the body part 21 and other parameters are also calculated. However, to simplify the description, a description will be given with the measuring point X as the imaging position of the new image.

As step S2, the feature extraction unit 40 of the control unit 36 extracts feature points from the new image Pn. Further, the feature extraction unit 40 attaches imaging situation information such as imaging time information to the extracted feature points. In Figure 1, the feature extraction unit 40 extracts five feature points Fn1-Fn5 corresponding to corners of a building T as feature points in the new image Pn.

As step S3, the feature matching unit 41 of the control unit 36 determines whether or not the new image has approximate imaging position information. When the determination result is true (Yes), that is, when the new image has approximate imaging position information, the feature matching unit 41 proceeds to step S4. On the other hand, when the determination result is false (No), that is, when the new image has no approximate imaging position information, the feature matching unit 41 proceeds to step S5.

In step S4, the feature matching unit 41 of the control unit 36 searches the storage unit 35 for an existing image in an imaging situation close to that of the new image Pn, and acquire the existing image. For example, the feature matching unit 41 acquires an existing image Pe at a close imaging position or imaging time of day.

In step S5, the feature matching unit 41 of the control unit 36 searches the storage unit 35 for an existing image with imaging content close to that of the new image Pn, and acquire the existing image. For example, as shown in Figure 1, the feature matching unit 41 acquires an existing image Pe in which the same building T is captured.

After acquiring the existing image Pe in step S4 or step S5, the feature matching unit 41 of the control unit 36 matches the feature points Fn in the new image Pn with the feature points Fe in the existing image Pe as step S6. Specifically, the feature matching unit 41 compares the feature amounts of the feature points between the two images to extract the feature points Fn in the new image Pn corresponding to the feature points Fe in the existing image Pe (i.e., having coincident or close feature amounts) and associate them with each other. For example, from the building T in the existing image Pe and the new image Pn in Figure 1, the feature matching unit 41 extracts feature points at coincident positions between the two images. In Figure 1, the feature points Fe1-Fe3 in the existing image Pe coincide with the feature points Fn1-Fn3 in the new image Pn. The feature matching unit 41 associates the feature point Fe1 with the feature point Fn1, the feature point Fe2 with the feature point Fn2, and the feature point Fe3 with the feature point Fn3.

Next, as step S7, the imaging situation calculation unit 42 of the control unit 36 calculates the imaging situation of the new image by back calculation from the feature points associated in step S6. That is, as shown in Figure 1, the imaging situation calculation unit 42 calculates the imaging situation such as the coordinates of the imaging position (the measuring point X) and the imaging posture from the associated feature points Fn1-Fn3.

As step S8, the differential feature identification unit 43 of the control unit 36 extracts differential feature points that fail to be associated with the feature points in the existing image among the feature points in the new image, and attaches relative position information with respect to the associated feature points to the differential feature points based on the imaging situation of the new image calculated in step S7. That is, as shown in Figure 1, the differential feature identification unit 43 extracts differential feature points Fn4 and Fn5 that fail to be associated with the feature points Fe1-Fe3 in the existing image among the feature points Fn1-Fn5 in the new image Pn. Then, the differential feature identification unit 43 calculates the relative relationship of the differential feature points Fn4 and Fn5 with respect to the associated feature points Fn1-Fn3 from the positional coordinates of the measuring point X and the imaging situation of the new image Pn, and attaches the calculated relative position information to each of the differential feature points Fn4 and Fn5.

As step S9, the DB update unit 44 of the control unit 36 updates the feature point DB by adding information on the new image Pn to the storage unit 35. Specifically, the DB update unit 44 adds, to the storage unit 35, the new image Pn having the feature points Fn1-Fn3 associated with the feature points Fe1-Fe3 in the existing image Pe and the feature points Fn4 and Fn5 to which the relative position information with respect to these associated feature points Fn1-Fn3 is attached. Further, each of the feature points Fn1-Fn5 in the new image Pn includes imaging situation information such as imaging time information and the imaging posture. The storage unit 35 stores the new image Pn including these types of information as an existing image.

As step S10, the display control unit 45 of the control unit 36 produces a three-dimensional image based on the updated feature point DB, displays it on the display unit 33, and returns the routine. For example, in Figure 1, when the differential feature points Fn4 and Fn5 in the new image are new feature points, the area including the differential feature points Fn4 and Fn5 that is not displayed before update is displayed in the three-dimensional image produced by the display control unit 45.

As described above, according to the data management system 1, the data management apparatus 2, the data management method, and the data management program according to the present embodiment, capturing a new image and performing matching with an existing image without using a surveying apparatus or other apparatuses makes it possible to calculate the imaging situation such as the imaging position and imaging posture of the new image and continuously update information on new feature points. This makes it possible to check a work site and grasp the state of the topography more easily. For example, since the storage unit 35 manages feature points in time series, any changes (differences) in the feature points mean that it is possible to grasp temporal changes in a target structure or topography. That is, it is possible to grasp changes in the object or topography for each shot of a new image.

Further, the feature matching unit 41 can easily acquire an existing image suitable for matching by acquiring an existing image in an imaging situation close to the imaging situation of a new image as an existing image corresponding to the new image.

Further, the feature matching unit 41 can acquire an existing image suitable for matching even when the imaging situation of a new image is insufficient by acquiring an existing image with content similar to that captured in the new image as an existing image corresponding to the new image.

Further, attaching imaging time information of imaging by the imaging unit 30 to feature points extracted by the feature extraction unit from a new image allows management of each feature point in time series.

Furthermore, the display control unit 45 produces a three-dimensional image based on existing images stored in the storage unit 35, thereby making it possible to continuously produce a three-dimensional image each time a new image is captured according to the update of the feature point DB, and thus to check a work site and grasp the state of the topography much more easily.

This concludes the description of the embodiment of the present disclosure, but aspects of the present disclosure are not limited to this embodiment.

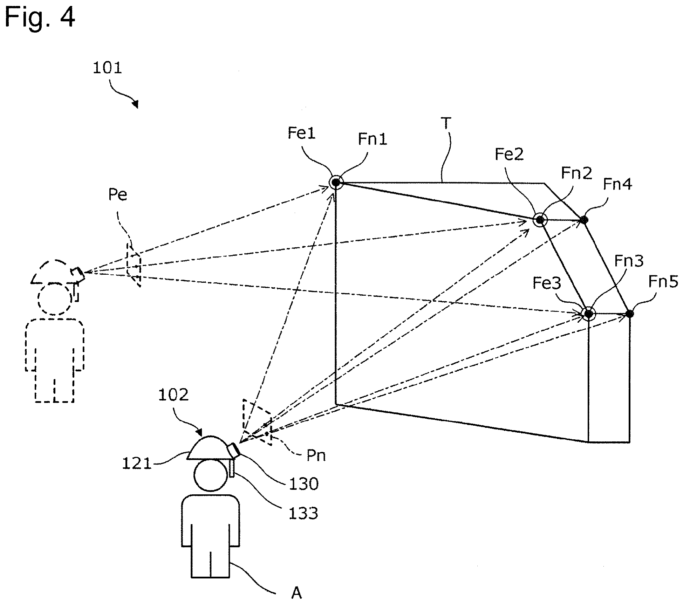

For example, Figure 4 shows a configuration diagram of a data management system according to a modification. A data management system 101 in the modification will be described based on this figure.

A data management apparatus 102 in the modification is a wearable apparatus with a body 121 mountable on the worker A's head. The data management apparatus 102 is a head-mounted display (HMD) with a display unit 133 capable of so-called augmented reality (AR) display. An imaging unit 130 is provided corresponding to the mounting position of the display unit 133 so as to capture images in the same direction as the operator A's orientation. The other components are the same as those in the above embodiment, and thus the description is omitted.

The data management apparatus 102 in the modification captures, for example, a moving image via the imaging unit 130. A control unit 136 not shown updates the feature point DB in real time, and causes a display unit 134 to display a three-dimensional image in AR.

The configuration described above enables update of the feature point DB by merely the operator A mounting the data management apparatus 2 on their head and turning their face toward their surroundings while moving around the site, and enables real time confirmation of a three-dimensional image based on the updated feature points via the display unit 134. This makes it possible to check a work site and grasp the state of the topography much more easily.

Thus, a data processing system 1A, an imaging apparatus 2A, and a data processing method and a data processing program using the data processing system 1A can efficiently manage the work performed by the operator A.

Further, although the above embodiment and modification implement the data management systems 1 and 101 with the data management apparatuses 2 and 102 alone, the present invention is not limited to such a configuration, and an external apparatus may have a part of the configuration. For example, it is also possible to build the feature point DB in a storage unit included in an external management server. In this case, the management server and one or more data management apparatuses are connected to each other in a mutually communicative manner. The data management system having such a configuration makes it possible to easily share the feature point DB with a plurality of data management apparatuses, and thus to check a work site and grasp the state of the topography much more easily.

Examples of the configuration of the present embodiment are as follows.
[1] A data management apparatus comprising:
   a storage unit that stores an existing image including a feature point;
   an imaging unit that captures a new image;
   a feature extraction unit that extracts a feature point from the new image;
   a feature matching unit that acquires an existing image corresponding to the new image from the storage unit, and extracts and associates a feature point in the new image corresponding to a feature point in the acquired existing image;
   an imaging situation calculation unit that calculates an imaging situation of the new image from the associated feature point in the new image;
   a difference identification unit that extracts a differential feature point that fails to be associated with a feature point in the existing image among feature points in the new image, and attaches relative position information with respect to the associated feature point to the differential feature point based on the imaging situation of the new image; and
   an update unit that stores the new image in which the relative position information is attached to the differential feature point in the storage unit as an existing image.
[2] The data management apparatus according to [1], wherein the imaging situation calculation unit calculates an imaging position and an imaging posture of the new image as the imaging situation.
[3] The data management apparatus according to [1] or [2], wherein the feature matching unit acquires an existing image in an imaging situation close to the imaging situation of the new image from the storage unit as an existing image corresponding to the new image.
[4] The data management apparatus according to one of [1] to [3], wherein the feature matching unit acquires an existing image having content similar to content captured in the new image from the storage unit as an existing image corresponding to the new image.
[5] The data management apparatus according to one of [1] to [4], wherein the feature extraction unit attaches information on an imaging time when imaging is performed by the imaging unit to a feature point extracted from the new image.
[6] The data management apparatus according to one of [1] to [5], further comprising a display control unit that produces a three-dimensional image based on an existing image stored in the storage unit.
[7] A data management system comprising:
   a storage unit that stores an existing image including a feature point;
   an imaging unit that captures a new image;
   a feature extraction unit that extracts a feature point from the new image;
   a feature matching unit that acquires an existing image corresponding to the new image from the storage unit, and extracts and associates a feature point in the new image corresponding to a feature point in the acquired existing image;
   an imaging situation calculation unit that calculates an imaging situation of the new image from the associated feature point in the new image;
   a difference identification unit that extracts a differential feature point that fails to be associated with a feature point in the existing image among feature points in the new image, and attaches relative position information with respect to the associated feature point to the differential feature point based on the imaging situation of the new image; and
   an update unit that stores the new image in which the relative position information is attached to the differential feature point in the storage unit as an existing image.
[8] A data management method comprising:
   a storage step of a storage unit storing an existing image including a feature point;
   an imaging step of an imaging unit capturing a new image;
   a feature extraction step of a feature extraction unit extracting a feature point from the new image;
   a feature matching step of a feature matching unit acquiring an existing image corresponding to the new image from the storage unit, and extracting and associating a feature point in the new image corresponding to a feature point in the acquired existing image;
   an imaging situation calculation step of an imaging situation calculation unit calculating an imaging situation of the new image from the associated feature point in the new image;
   a difference identification step of a difference identification unit extracting a differential feature point that fails to be associated with a feature point in the existing image among feature points in the new image, and attaching relative position information with respect to the associated feature point to the differential feature point based on the imaging situation of the new image; and
   an update step of an update unit storing the new image in which the relative position information is attached to the differential feature point in the storage unit as an existing image.
[9] A data management program for causing a computer to execute:
   a storage step of a storage unit storing an existing image including a feature point;
   an imaging step of an imaging unit capturing a new image;
   a feature extraction step of a feature extraction unit extracting a feature point from the new image;
   a feature matching step of a feature matching unit acquiring an existing image corresponding to the new image from the storage unit, and extracting and associating a feature point in the new image corresponding to a feature point in the acquired existing image;
   an imaging situation calculation step of an imaging situation calculation unit calculating an imaging situation of the new image from the associated feature point in the new image;
   a difference identification step of a difference identification unit extracting a differential feature point that fails to be associated with a feature point in the existing image among feature points in the new image, and attaching relative position information with respect to the associated feature point to the differential feature point based on the imaging situation of the new image; and
   an update step of an update unit storing the new image in which the relative position information is attached to the differential feature point in the storage unit as an existing image.

### [Reference Signs List]

- 1, 101: data management system
- 2, 102: data management apparatus
- 21: body part
- 22: pin pole
- 30: imaging unit
- 31: posture detection unit
- 32: operation unit
- 33: display unit
- 34: communication unit
- 35: storage unit
- 36: control unit
- 40: feature extraction unit
- 41: feature matching unit
- 42: imaging situation calculation unit
- 43: differential feature identification unit
- 44: DB update unit
- 45: display control unit

## Claims

1. A data management apparatus comprising:
a storage unit that stores an existing image including a feature point;
an imaging unit that captures a new image;
a feature extraction unit that extracts a feature point from the new image;
a feature matching unit that acquires an existing image corresponding to the new image from the storage unit, and extracts and associates a feature point in the new image corresponding to a feature point in the acquired existing image;
an imaging situation calculation unit that calculates an imaging situation of the new image from the associated feature point in the new image;
a difference identification unit that extracts a differential feature point that fails to be associated with a feature point in the existing image among feature points in the new image, and attaches relative position information with respect to the associated feature point to the differential feature point based on the imaging situation of the new image; and
an update unit that stores the new image in which the relative position information is attached to the differential feature point in the storage unit as an existing image.

2. The data management apparatus according to claim 1, wherein the imaging situation calculation unit calculates an imaging position and an imaging posture of the new image as the imaging situation.

3. The data management apparatus according to claim 1, wherein the feature matching unit acquires an existing image in an imaging situation close to the imaging situation of the new image from the storage unit as an existing image corresponding to the new image.

4. The data management apparatus according to claim 1, wherein the feature matching unit acquires an existing image having content similar to content captured in the new image from the storage unit as an existing image corresponding to the new image.

5. The data management apparatus according to claim 1, wherein the feature extraction unit attaches information on an imaging time when imaging is performed by the imaging unit to a feature point extracted from the new image.

6. The data management apparatus according to claim 1, further comprising a display control unit that produces a three-dimensional image based on an existing image stored in the storage unit.

7. A data management system comprising:
a storage unit that stores an existing image including a feature point;
an imaging unit that captures a new image;
a feature extraction unit that extracts a feature point from the new image;
a feature matching unit that acquires an existing image corresponding to the new image from the storage unit, and extracts and associates a feature point in the new image corresponding to a feature point in the acquired existing image;
an imaging situation calculation unit that calculates an imaging situation of the new image from the associated feature point in the new image;
a difference identification unit that extracts a differential feature point that fails to be associated with a feature point in the existing image among feature points in the new image, and attaches relative position information with respect to the associated feature point to the differential feature point based on the imaging situation of the new image; and
an update unit that stores the new image in which the relative position information is attached to the differential feature point in the storage unit as an existing image.

8. A data management method comprising:
a storage step of a storage unit storing an existing image including a feature point;
an imaging step of an imaging unit capturing a new image;
a feature extraction step of a feature extraction unit extracting a feature point from the new image;
a feature matching step of a feature matching unit acquiring an existing image corresponding to the new image from the storage unit, and extracting and associating a feature point in the new image corresponding to a feature point in the acquired existing image;
an imaging situation calculation step of an imaging situation calculation unit calculating an imaging situation of the new image from the associated feature point in the new image;
a difference identification step of a difference identification unit extracting a differential feature point that fails to be associated with a feature point in the existing image among feature points in the new image, and attaching relative position information with respect to the associated feature point to the differential feature point based on the imaging situation of the new image; and
an update step of an update unit storing the new image in which the relative position information is attached to the differential feature point in the storage unit as an existing image.

9. A data management program for causing a computer to execute:
a storage step of a storage unit storing an existing image including a feature point;
an imaging step of an imaging unit capturing a new image;
a feature extraction step of a feature extraction unit extracting a feature point from the new image;
a feature matching step of a feature matching unit acquiring an existing image corresponding to the new image from the storage unit, and extracting and associating a feature point in the new image corresponding to a feature point in the acquired existing image;
an imaging situation calculation step of an imaging situation calculation unit calculating an imaging situation of the new image from the associated feature point in the new image;
a difference identification step of a difference identification unit extracting a differential feature point that fails to be associated with a feature point in the existing image among feature points in the new image, and attaching relative position information with respect to the associated feature point to the differential feature point based on the imaging situation of the new image; and
an update step of an update unit storing the new image in which the relative position information is attached to the differential feature point in the storage unit as an existing image.
